(19) **Europäisches Patentamt**

**European Patent Office**

**Office européen des brevets**

(11) Veröffentlichungsnummer: **0 601 051 B1**

(12) # EUROPÄISCHE PATENTSCHRIFT

(45) Veröffentlichungstag der Patentschrift: **10.05.95**

(51) Int. Cl.[6]: **B64G  1/36**, G05D 1/08

(21) Anmeldenummer: **92918783.9**

(22) Anmeldetag: **04.09.92**

(86) Internationale Anmeldenummer:
**PCT/EP92/02051**

(87) Internationale Veröffentlichungsnummer:
**WO 93/04923 (18.03.93 93/08)**

(54) **MESSANORDNUNG FÜR DIE ANWENDUNG BEI DER LAGEREGELUNG EINES DREIACHSENSTABILISIERTEN SATELLITEN SOWIE ZUGEHÖRIGES AUSWERTEVERFAHREN, REGELUNGSSYSTEM UND -VERFAHREN.**

(30) Priorität: **06.09.91 DE 4129630**

(43) Veröffentlichungstag der Anmeldung:
**15.06.94 Patentblatt  94/24**

(45) Bekanntmachung des Hinweises auf die Patenterteilung:
**10.05.95 Patentblatt  95/19**

(84) Benannte Vertragsstaaten:
**DE FR GB IT**

(56) Entgegenhaltungen:
**EP-A- 0 394 897
EP-A- 0 461 394
US-A- 3 937 423
US-A- 5 020 744**

(73) Patentinhaber: **Daimler-Benz Aerospace Aktiengesellschaft**

**D-81663 München (DE)**

(72) Erfinder: **SURAUER, Michael
Lindenstrasse 11
D-8224 Chieming (DE)**
Erfinder: **BITTNER, Helmut
Zirlerstrasse 4
D-8000 München 70 (DE)**
Erfinder: **FICHTER, Walter
Kästlenstrasse 20
D-8000 München 82 (DE)**
Erfinder: **FISCHER, Horst-Dieter
Grünauer Allee 14
D-8025 Unterhaching (DE)**

Rank Xerox (UK) Business Services
(3.10/3.09/3.3.3)

**Beschreibung**

Die Erfindung bezieht sich auf eine Meßanordnung gemäß dem Oberbegriff des Patentanspruchs 1 sowie auf zugehörige Auswerteverfahren zur Ermittlung der Satelliten-Drehgeschwindigkeit und der Satelliten-Ablage unter Verwendung einer derartigen Meßanordnung.

Eine Meßanordnung der eingangs genannten Art ist aus H. Bittner et al. "The Attitude Determination and Control Subsystem of the Intelsat V Spacecraft", Proceedings of AOCS Conference, Nordwijk, 3. bis 6. Oktober 1977, ESA SP-128, November 1977, bekannt. Die Satelliten dieses bekannten Typs verfügen über ein redundant ausgelegtes, in allen drei Achsen X, Y, Z des satellitenfesten Koordinatensystems messendes Geschwindigkeitskreisel-Paket sowie über mehrere, ebenfalls redundant ausgelegte Sonnensensoren mit zwei Gesichtsfeldern, deren eines um die negative Z-Achse zentriert ist, die eine Hälfte der XZ-Ebene umfaßt und senkrecht dazu, in Richtung der Y-Achse, eine gewisse Breite aufweist, und deren anderes um die positive X-Achse zentriert ist, ein Drittel der XY-Ebene umfaßt und ebenfalls eine gewisse Breite senkrecht dazu aufweist. Diese Sensoranordnung dient dazu, Drehungen des Satellitenkörpers, d.h. die Komponenten des Satelliten-Drehgeschwindigkeitsvektors, messend zu verfolgen und unabhängig davon die Orientierung des Satelliten bezüglich der Sonne durch Bestimmung des vom Satelliten zum Sonnenmittelpunkt weisenden Sonnenvektors festzustellen, sobald die Sonne sich im Blickfeld der Sonnensensoren befindet. Die von den Sensoren gelieferten Meßergebnisse werden vom Lageregelungssystem des Satelliten dazu benutzt, gezielt Lageänderungen bzw. Drehungen zu kommandieren, um die im Transferorbit bzw. im endgültigen Satellitenorbit erforderlichen Manöver durchführen bzw. auftretende Lageabweichungen korrigieren zu können.

Die zur Messung, Kontrolle und Dämpfung von Satelliten-Drehbewegungen dienenden Geschwindigkeitskreisel sind elektromechanische Präzisionsgeräte mit sehr kompliziertem Aufbau. Sie sind daher entsprechend kostspielig und störanfällig. Zur Erfüllung der Zuverlässigkeitsanforderungen unter den extremen Umweltbedingungen des Weltraums, insbesondere bei Langzeitmissionen, müssen diese Geräte außerdem redundant vorhanden sein, was den Aufwand an Kosten und Gewicht zusätzlich erhöht. Bei Ausfall einer Meßachse in einem mehrere Geschwindigkeitskreisel enthaltenden Kreiselpaket sind im allgemeinen auch die verbleibenden Kreiselachsen nicht mehr einsetzbar. Da die Ausfallwahrscheinlichkeit eines Systems mit der Anzahl der Funktionselemente zunimmt, ist der Einsatz eines Meßsystems mit großer Anzahl an störanfälligen elektromechanischen Komponenten auch mit höheren Ausfallrisiken behaftet.

Der Erfindung liegt daher die Aufgabe zugrunde, eine einfachere und damit billigere und zuverlässigere Meßanordnung der eingangs genannten Art zu schaffen. Mit dieser Meßanordnung soll es möglich sein, alle in der Transferbahn sowie auf der endgültigen Satellitenbahn, insbesondere im geosynchronen Orbit, erforderlichen Manöver weitgehend automatisch an Bord des Satelliten durchzuführen. Weiterhin soll die Anzahl störanfälliger Komponenten nach Möglichkeit auf ein Minimum reduziert werden.

Zu den erforderlichen Manövern zählen: Sonneneinfang aus beliebiger Anfangslage, Erdakquisition aus der Sonnenorientierung, Ausrichtung zum Apogäumsmanöver, Lagestabilisierung in der Sollorientierung und Bewegungsdämpfung während der Manöverdauer in der Transferbahn sowie die Erd- und Sonnenreakquisition im geosynchronen Orbit.

Die gestellte Aufgabe ist gemäß der Erfindung durch die im kennzeichnenden Teil des Patentanspruchs 1 enthaltenen Merkmale gelöst.

Demnach umfaßt die Meßanordnung so viele und so angeordnete Sonnensensoren, daß die Messung der Komponenten des Sonnenvektors $\underline{S}$ in einer Ebene im vollen Winkel bereich ($0 \leq \alpha_1 \leq 2\pi$) und senkrecht zu dieser Ebene in einem begrenzten Winkelbereich $|\alpha_2| \leq \alpha_{2max}$ ($\alpha_{2max} < 90°$) möglich wird. Hierbei ist ein satellitenfestes Koordinatensystem zugrundegelegt, vorzugsweise ein kartesisches XYZ-System mit der Rollachse X, der Nickachse Y sowie der Gierachse Z, wobei im geosynchronen Orbit im allgemeinen die Rollachse in Bahnrichtung, die Gierachse zum Erdmittelpunkt hin und die Nickachse senkrecht zur Bahnebene orientiert sind. Die im folgenden auch als Meßebene bezeichnete Ebene, die vom Meßbereich der Sonnensensoren voll erfaßt sein soll, kann beispielsweise die XZ-Ebene sein. Senkrecht dazu, d.h. in Richtung der Y-Achse, ist dann der Meßbereich der Sonnensensoren begrenzt ($\pm\alpha_{2max}$). Der so definierte Meßbereich der Sonnensensoren kann durch aneinandergrenzende bzw. sich überlappende Gesichtsfelder mehrerer einzelner Sonnensensoren mit unterschiedlich ausgerichteten optischen Achsen gebildet werden.

Als weiteres wesentliches Merkmal ist gefordert, daß anstelle des bei den bekannten Satelliten vorhandenen, dreiachsig messenden Geschwindigkeitskreisel-Pakets nurmehr ein einachsig messender, integrierender Geschwindigkeitskreisel vorhanden sein soll. Dessen Meßachse, repräsentiert durch einen Einheitsvektor $\underline{G}$, soll mit der Meßebene der Sonnensensoren einen Winkel $\beta$ einschließen, der größer ist

als $(\pi/2)$ - $\alpha_{2max}$. Die Meßachse des Geschwindigkeitskreisels soll also innerhalb eines im Ursprung des Koordinatensystems O zentrierten Doppelkegels liegen, dessen Symmetrieachse senkrecht auf der Meßebene der Sonnensensoren steht. Im Falle der XZ-Ebene als Meßebene der Sonnensoren ist diese Symmetrieachse durch die Y-Achse gegeben.

In weiterer Ausbildung der Erfindung ist vorgesehen, den zulässigen Raumwinkelbereich für die Meßachse des Geschwindigkeitskreisels noch weiter einzuschränken, wie im Anspruch 2 angegeben. Die Gründe für die Forderung hinsichtlich der zulässigen Ausrichtung der Meßachse des Geschwindigkeitskreisels werden später noch deutlich.

In den Ansprüchen 3 und 4 sind Auswerteverfahren angegeben, mit denen die Satelliten-Drehgeschwindigkeit sowie die Satelliten-Ablage bezüglich einer vorgegebenen Referenzrichtung ermittelt werden können, wobei die erfindungsgemäße Meßanordnung zugrundegelegt ist.

Im folgenden ist die Erfindung anhand von Abbildungen näher erläutert. Es zeigen in schematischer Weise:

Fig. 1        die Geometrie von Transferbahn und geosynchroner Bahn für einen Erdsatelliten, bezogen auf Erde und Sonne,

Fig. 2a, b    das Gesichtsfeld der Sonnensensoren,

Fig. 3        den zulässigen Raumwinkelbereich für die Meßachse des Geschwindigkeitskreisels,

Fig. 4        ein Blockschaltbild eines Regelungssystems unter Verwendung der erfindungsgemäßen Meßanordnung.

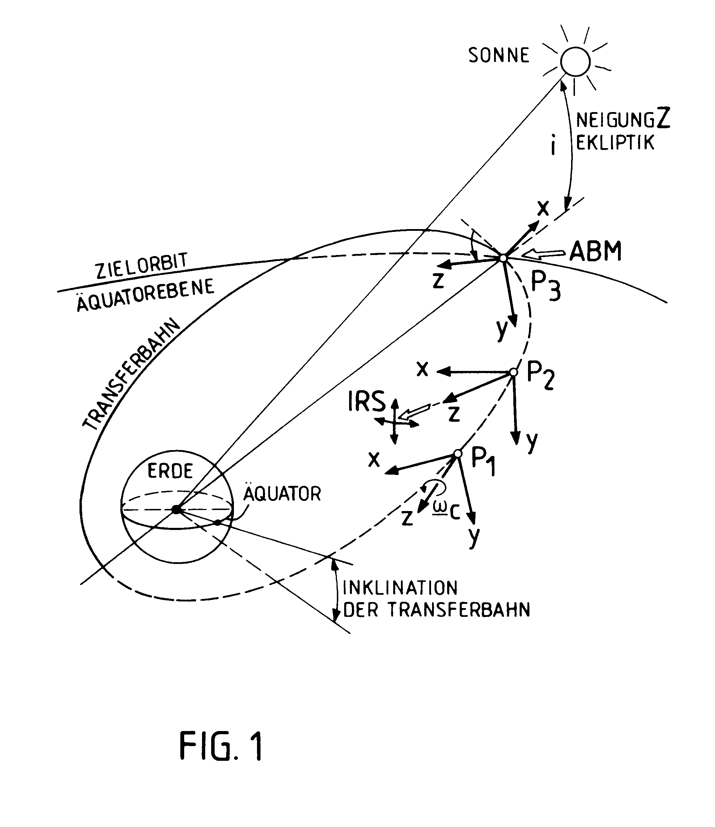

Die Erfindung kann u.a. bei geosynchronen Satelliten angewendet werden. In Fig. 1 ist schematisch die Transferbahn eines derartigen Satelliten sowie ein Teil der geosynchronen Satellitenbahn dargestellt. Der Satellit wird zunächst auf eine elliptische Transferbahn mit niedrigem Perigäum (erdnächster Bahnpunkt) befördert, dessen Apogäum (erdfernster Bahnpunkt) bereits dem Radius der endgültigen, nahezu kreisförmigen geosynchronen Satellitenbahn entspricht. Die Ebene der geosynchronen Satellitenbahn stimmt in etwa mit der Äquatorebene überein. Die Ebene der Transferbahn ist gegenüber der Ebene der geosynchronen Bahn geneigt.

Nach der Ablösung vom Transportfahrzeug muß der Satellit auf der Transferbahn einige Manöver durchführen, bevor er schließlich in die geosynchrone Bahn eingeschossen wird. In Fig. 1 sind drei verschiedene Positionen $P_1$ bis $P_3$ auf der Transferbahn dargestellt, in denen der Satellit jeweils verschiedene Orientierungen einnehmen soll. In Position $P_1$ ist der Satellit mit seiner negativen Z-Achse zur Sonne hin ausgerichtet und rotiert um die Verbindungslinie Satellit-Sonnenmittelpunkt mit einer kommandierbaren Drehgeschwindigkeit $\omega_C$ (Drehgeschwindigkeitsvektor $\underline{\omega}_C$). In Position $P_2$ ist der Erdeinfang (Erdakquisition) bereits erfolgt, so daß der Satellit mit seiner positiven Z-Achse zum Erdmittelpunkt hin orientiert ist. Dies geschieht mit Hilfe seiner in Richtung der Z-Achse blickenden Infrarot-Erdsensoren (IRS), deren zueinander orthogonale Meßrichtungen schematisch angedeutet sind. Diese Orientierung ermöglicht mit Hilfe der Erd- und Sonnensensoren die Erstellung einer optischen Dreiachsen-Referenz zur Kreiselkalibrierung und zur Herbeiführung der korrekten Orientierung des Satelliten vor Einleitung des Apogäumsmanövers in Position $P_3$. Für dieses Manöver muß der Satellit mit seiner positiven Z-Achse in die Richtung orientiert sein, welche die geosynchrone Bahn im Schnittpunkt mit der Transferbahn aufweist, da der Schub des Apogäumsmotors in Richtung der negativen Z-Achse wirkt.

Die hier für die Transferbahn geschilderten Manöver, nämlich die Sonnen- und Erdakquisition, können natürlich auch auf der geosynchronen Bahn notwendig werden, sobald die geforderte Erd- und/oder Sonnenorientierung verloren geht. Selbstverständlich ist die Erfindung auch auf andere Transferbahn- und Satellitenkonfigurationen, insbesondere was die Anordnung des Apogäumsmotors und eventuell der Erdsensoren anbelangt, übertragbar.

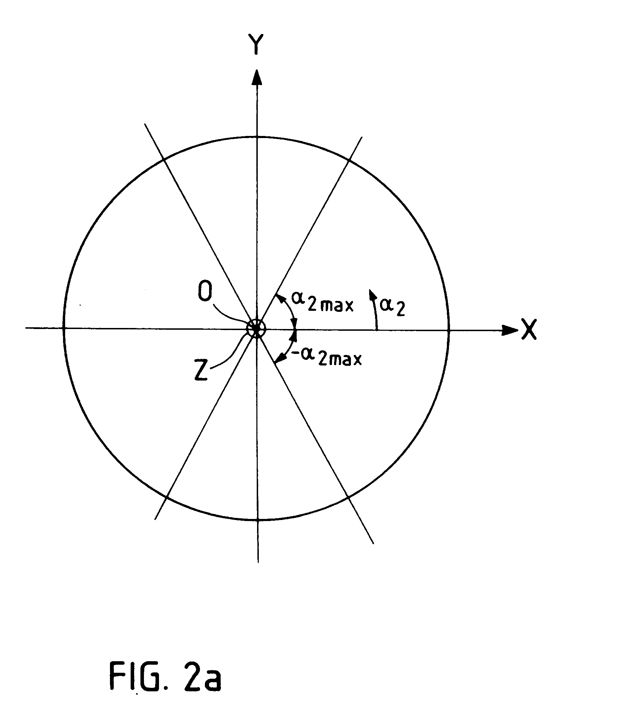

In Fig. 2a ist gezeigt, wie das Gesichtsfeld bzw. der Meßbereich der Sonnensensoren symmetrisch zur XZ-Ebene sowie rotationssymmetrisch zur Y-Achse des satellitenfesten Koordinatensystems XYZ ausgerichtet ist. Dieser Meßbereich umfaßt einen Winkel bereich von $\alpha_{2max} \geq \alpha_2 \geq -\alpha_{2max}$, bezogen auf die XZ-Ebene, welcher rotationssymmetrisch zur Y-Achse zu denken ist und damit insgesamt eine Rundumsicht ($0 \leq \alpha_1 \leq 2\pi$) ermöglicht. Nicht im Meßbereich der Sonnensensoren enthalten ist damit ein rotationssymmetrisch um die Y-Achse gelegener Raumwinkelbereich der Form eines im Ursprung O des Koordinatensystems zentrierten Doppelkegels mit einem Öffnungswinkel von $2[(\pi/2) - \alpha_{2max}]$.

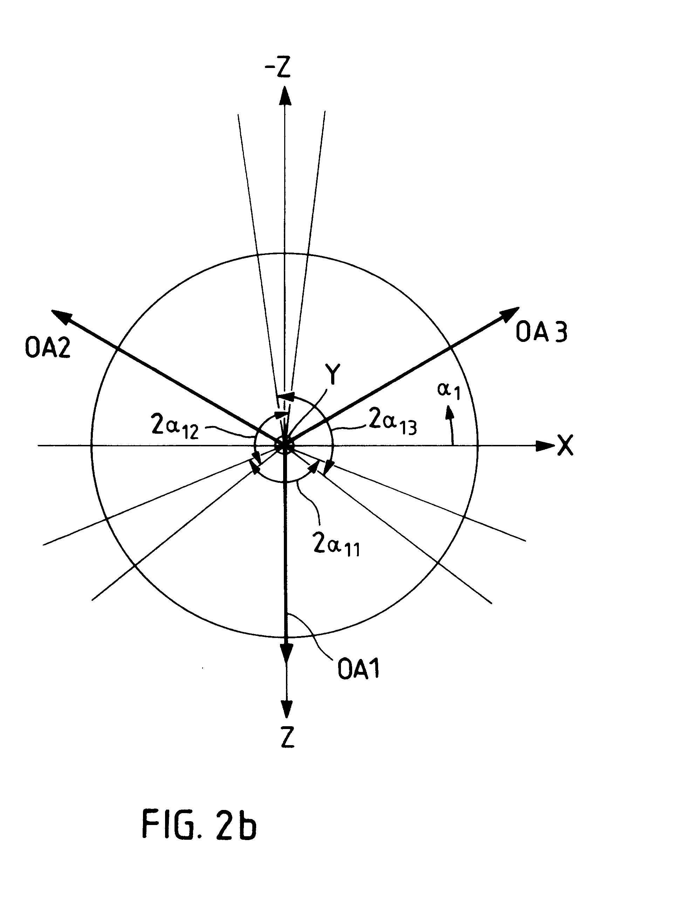

In Fig. 2b ist dargestellt, wie die Rundumsicht in der XZ-Ebene durch drei im Winkelabstand von 120° zueinander angeordnete Sonnensensoren mit den optischen Achsen OA1 bis OA3 bewirkt werden kann. In diesem Ausführungsbeispiel hat jeder der drei Sonnensensoren in der XZ-Ebene einen um seine optische Achse zentrierten Meßbereich von $2\alpha_{11}$, $2\alpha_{12}$ bzw. $2\alpha_{13}$ von jeweils beispielsweise ±67°. Hieraus ergibt sich in diesem konkreten Fall eine Überlappung der benachbarten Meßbereiche von jeweils 14°. In Y-Richtung beträgt der Meßbereich jeweils ±$\alpha_{2max}$.

Selbstverständlich sind auch andere Konstellationen einzelner Sonnensensoren möglich, die jedoch insgesamt die geforderte Rundumsicht in einer Ebene des satellitenfesten Koordinatensystems, beispielsweise der XZ-Ebene, liefern müssen, mit einer gewissen Breite senkrecht dazu.

Für jeden zweiachsig messenden Sonnensensor können auch zwei einachsig messende Sonnensensoren verwendet werden, deren Meßrichtungen um die jeweilige optische Achse um 90° gedreht sind.

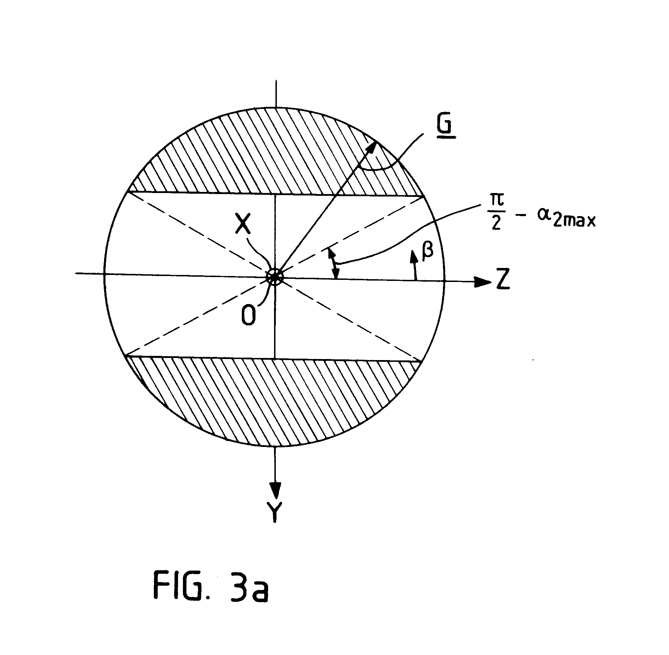

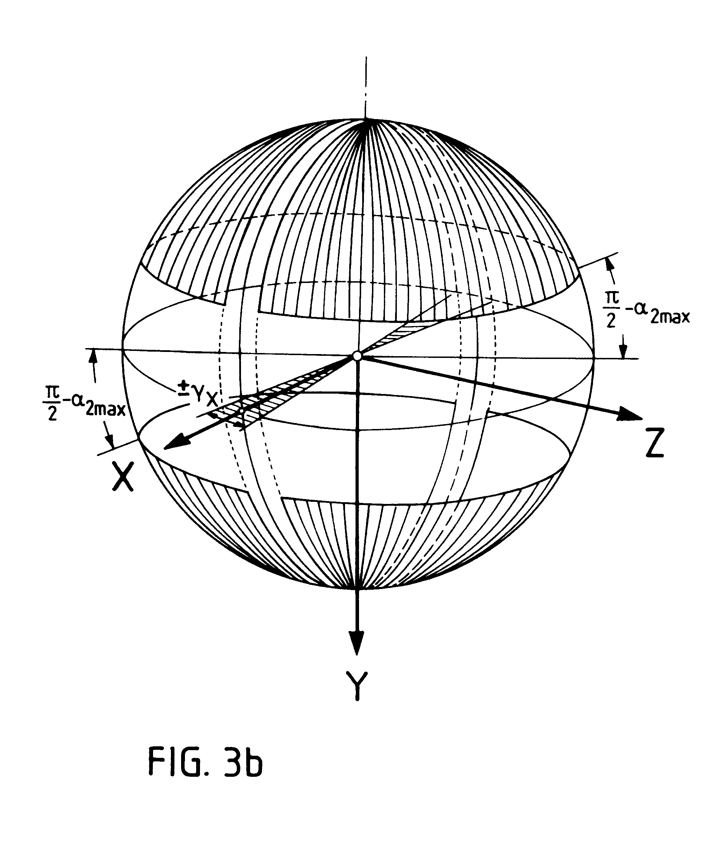

Fig. 3a zeigt den zulässigen Raumwinkelbereich für die Meßachse des Geschwindigkeitskreisels. Dargestellt ist in Seitenansicht eine Einheitskugel (Radius 1), die um den Ursprung O des satellitenfesten Koordinatensystems XYZ zentriert ist. Der Einheitsvektor $\underline{G}$ repräsentiert die Meßachse des Geschwindigkeitskreisels. Für den Endpunkt des Einheitsvektors $\underline{G}$ auf der Einheitskugel ist der schraffiert gezeichnete Raumwinkelbereich zugelassen. Dieser ist rotationssymmetrisch zur Y-Achse und umfaßt für den von der XZ-Ebene aus gemessenen Winkel $\beta_2$ die Bereiche $|\beta_2| \geq (\pi/2) - \alpha_{2max}$. Selbstverständlich ist die Lage des Vektors $\underline{G}$ nicht, wie in Fig. 3a dargestellt, auf die YZ-Ebene beschränkt, sondern es ist zunächst der gesamte Bereich von $0 \leq a_1 \leq 2\pi$ zugelassen.

Fig. 3b zeigt in perspektivischer Darstellung den bereits aus Fig. 3a zu entnehmenden Sachverhalt, wobei allerdings eine weitere Einschränkung des zulässigen Raumwinkelbereichs für die Meßachse des Geschwindigkeitskreisels (Vektor $\underline{G}$) hinzukommt. Dieser nicht zugelassene Raumwinkelbereich wird erzeugt durch einen in der XZ-Ebene beiderseits der X-Achse gelegenen Winkelbereich $\pm\gamma_X$, sowie durch Rotation dieses Winkels um die Z-Achse. Als zulässiger Raumwinkelbereich für die Meßachse des Geschwindigkeitskreisels verbleiben also die gemäß Fig. 3b auf der dortigen Einheitskugel schraffiert dargestellten vier Zonen.

Die erfindungsgemäße Meßanordnung ermöglicht es, als wichtige Meßgrößen für die Lageregelung mittels der Sonnensensoren den Sonnenvektor $\underline{S} = (S_X, S_Y, S_Z)^T$ sowie mittels des Geschwindigkeitskreisels die zu dessen Meßachse parallele Komponente $\omega_m$ desSatelliten-Drehgeschwindigkeitsvektors $\underline{\omega}$ zu bestimmen. Der Sonnenvektor $\underline{S}$, definitionsgemäß ein Einheitsvektor ($|\underline{S}| = 1$), gibt an, in welcher Richtung bezüglich des satellitenfesten Koordinatensystems XYZ die Sonne liegt. Die Meßachse des Geschwindigkeitskreisels wird durch einen Einheitsvektor $\underline{G} = (G_X, G_Y, G_Z)^T$ repräsentiert ($|\underline{G}| = 1$). Für die Komponente $\omega_m$ des Satelliten-Drehgeschwindigkeitsvektors $\underline{\omega}$ gilt dann:

$$\omega_m = \underline{G}^T \cdot \underline{\omega}$$

Der obere Index T bezeichnet die transponierte Form eines Vektors bzw. einer Matrix, so daß der Vektor $\underline{G}$ als Spaltenvektor, der Vektor $\underline{G}^T$, welcher in dem obigen Skalarprodukt verwendet ist, wiederum als Zeilenvektor definiert ist. Bekanntlich ist es üblich, bei einem Skalarprodukt zweier Vektoren den einen als Spalten- und den anderen als Zeilenvektor darzustellen.

Mit den beiden Meßgrößen $\underline{S}$ sowie $\omega_m$ wird es möglich, die beiden für die Lageregelung entscheidenden Vektoren, nämlich den Satelliten-Drehgeschwindigkeitsvektor $\underline{\omega}$ sowie den Vektor $\underline{d}$ der Satelliten-Ablage bezüglich einer vorgegebenen Referenzlage zu bestimmen.

Die Ermittlung des Satelliten-Drehgeschwindigkeitsvektors $\underline{\omega}$ erfolgt hierbei nach den folgenden Vorschriften:

$$\underline{\omega} = \underline{\omega}_p + \underline{\omega}_q \qquad (1a)$$

$$\underline{\omega}_q = -\underline{\tilde{S}} \cdot \underline{\hat{S}} \tag{1b}$$

$$\omega_p = \underline{S}(\underline{S}^T \cdot \underline{\omega}) \qquad (1c)$$

$$\underline{S}^T \cdot \underline{\omega} = \frac{\omega_m - \underline{G}^T \cdot \underline{\omega}_q}{\underline{G}^T \cdot \underline{S}} \tag{1d}$$

Dabei bedeuten $\omega_q$, $\omega_p$ die Komponenten des Satelliten-Drehgeschwindigkeitsvektors senkrecht bzw. parallel zum Sonnenvektor S, $\underline{\tilde{S}}$ eine schiefsymmetrische Matrix zur alternativen Darstellung des Vektorproduktes $\underline{S} \times \underline{\hat{S}}$ mit

$$\tilde{\underline{S}} = \begin{bmatrix} 0 & -S_Z & S_Y \\ S_Z & 0 & -S_X \\ -S_Y & S_X & 0 \end{bmatrix}$$

$\underline{S}^T \cdot \omega$, $\underline{G}^T \cdot \omega_q$, $\underline{G}^T \cdot \underline{S}$ Skalarprodukte der entsprechenden Vektoren und $\hat{\underline{S}}$ die zeitliche Ableitung des Sonnenvektors, die aus den Meßsignalen der Sonnensensoranordnung $(\underline{S})$ gewinnbar ist durch numerische Differentiation oder über einen Hochpaß, vorzugsweise zweiter Ordnung, etwa gemäß der Übertragungsfunktion:

$$\hat{\underline{S}} = \frac{(T_1 + T_2)s^2 + s}{(1 + T_1 s)(1 + T_2 s)} \cdot \underline{S} \qquad (1e)$$

In der Praxis hat es sich als zweckmäßig erwiesen, bei der Ausführung der Rechenoperationen gemäß den Gleichungen (1a) bis 1(d) den numerischen Wert des Skalarproduktes $\underline{G}^T \cdot \underline{S}$ auf seine betragsmäßige Größe zu überprüfen und, wenn sein Wert eine vorgegebene untere Schranke (z.B. 0,1) unterschreitet, wegen der dann zu erwartenden numerischen Schwierigkeiten die Berechnung der Gleichungen (1d) und (1c) zu unterlassen und in Gleichung (1a) den Vektor $\omega_p$ einfach gleich 0 zu setzen.

Der Satelliten-Drehgeschwindigkeitsvektor $\omega$ kann aus dem gemessenen Sonnenvektor $\underline{S}$, dessen zeitlicher Ableitung $\hat{\underline{S}}$ und dem Kreiselsignal $\omega_m$ auch unter Bildung der Matrix $\underline{M}$ gemäß folgender Vorschrift gewonnen werden:

$$\underline{\omega} = \left(\underline{M}^T \cdot \underline{M}\right)^{-1} \cdot \underline{M}^T \begin{bmatrix} \hat{\underline{S}} \\ \omega_m \end{bmatrix}, \qquad \underline{M} = \begin{bmatrix} 0 & -S_Z & S_Y \\ S_Z & 0 & -S_X \\ -S_Y & S_X & 0 \\ G_X & G_Y & G_Z \end{bmatrix} \qquad (1f)$$

welche sich aus folgendem Ansatz ergibt:

$$\begin{bmatrix} \tilde{\underline{S}} \\ \underline{G}^T \end{bmatrix} \cdot \underline{\omega} \equiv \underline{M} \cdot \underline{\omega} = \begin{bmatrix} \hat{\underline{S}} \\ \omega_m \end{bmatrix} \qquad (1g)$$

Bei dieser Art der Ermittlung von $\underline{\omega}$ ergibt sich nach der linearen Theorie ein Schätzwert minimalen quadratischen Fehlers für den Drehgeschwindigkeitsvektor. Jedoch können in der Praxis bei schlecht konditionierter Matrix $\underline{M}$ eventuell numerische Probleme auftreten, z.B. wenn der Sonnenvektor $\underline{S}$ senkrecht auf der Meßachse $\underline{G}$ des Geschwindigkeitskreisels steht. Da die erstgenannte Variante zur Ermittlung des Drehgeschwindigkeitsvektors $\underline{\omega}$, wie bereits erwähnt, eine einfache Möglichkeit zur Vermeidung derartiger numerischer Probleme bietet, ist diese vorzuziehen.

Der Satelliten-Ablagevektor $\underline{d} = (d_X, d_Y, d_Z)^T$ stellt den Zusammenhang her zwischen dem gemessenen Sonnenvektor $\underline{S}$ und einem Sonnen-Referenzvektor $\underline{S}_R$, der die Sollrichtung für den Sonnenvektor $\underline{S}$ angibt. Eine Ablage liegt vor, wenn der Sonnenvektor $\underline{S}$ nicht mit dem Sonnen-Referenzvektor $\underline{S}_R$ zusammenfällt. Eine derartige Ablage entsteht durch Drehung des Satelliten aus der Referenzrichtung heraus, wobei diese Drehung als Summe von Rotationen um die Winkel $\Phi$, $\Theta$ und $\Psi$ um die Koordinatenachsen X, Y bzw. Z darstellbar ist ($\Phi$, $\Theta$, $\Psi$ sind Euler-Winkel). Der diese zusammengesetzte Drehung beschreibende Satelliten-Ablagevektor $\underline{d}$ ist bei kleinen Ablagen hinsichtlich seiner Komponenten direkt durch die Euler-Winkel darstellbar: $\underline{d} = (\Phi, \Theta, \Psi)^T$. Der Vektor $\underline{d}$ ist aus den Meßgrößen $\underline{S}$ sowie $\omega_m$ nach folgenden Vorschriften bestimmbar:

$$\underline{d} = \underline{d}_q + \underline{d}_p \qquad (2a)$$

$$\underline{d}_q = -\tilde{\underline{S}}_R \cdot (\underline{S} - \underline{S}_R) \equiv -\tilde{\underline{S}}_R \cdot \underline{S} \qquad (2b)$$

$$\underline{d}_p = \underline{S}_R (\underline{S}_R^T \cdot \underline{d}) \qquad (2c)$$

$$\underline{S}_R^T \cdot \underline{d} = \frac{\xi - \underline{G}^T \cdot \underline{d}_q}{\underline{G}^T \cdot \underline{S}_R} \qquad (2d)$$

$$\xi = \underline{G}^T \cdot \underline{d} = \int_0^t \omega_m \, dt \qquad (2e)$$

wobei bedeuten: $d_q$, $d_p$ die Komponenten des Satelliten-Ablagevektors $\underline{d}$ senkrecht bzw. parallel zum Sonnen-Referenzvektor $\underline{S}_R$ ($|\underline{S}_R| = 1$), $\tilde{\underline{S}}_R$ die analog zu $\tilde{\underline{S}}$ aus den Vektorkomponenten von $\underline{S}_R$ gebildete, schiefsymmetrische Vektorproduktmatrix und $\xi$ das integrierte Meßsignal des Geschwindigkeitskreisels.

Auch in diesem Falle lassen sich numerische Schwierigkeiten bei der Ausführung der Vorschriften gemäß den Gleichungen (2a) bis (2e) in einfacher Weise durch Kontrolle der betragsmäßigen Größe des Skalarproduktes $\underline{G}^T\cdot\underline{S}_R$ gleichermaßen vermeiden, wie bereits im Zusammenhang mit der Ermittlung des Drehgeschwindigkeitsvektors $\underline{\omega}$ beschrieben wurde. Der Satelliten-Ablagevektor $\underline{d}$ läßt sich außerdem in analoger Weise wie der Drehgeschwindigkeitsvektor $\underline{\omega}$ mit Hilfe einer Matrix $\underline{M}_R$ bestimmen, nämlich nach der Vorschrift

$$\underline{d} = (\underline{M}_R^T \cdot \underline{M}_R) \cdot \underline{M}_R^T \begin{bmatrix} \underline{S} - \underline{S}_R \\ \xi \end{bmatrix} \qquad (2f)$$

Dies basiert auf der Anwendung der linearen Theorie für kleine Ablagen, wobei dann näherungsweise gilt ($\underline{E}$ ist die Einheitsmatrix):

$$(\underline{E} - \tilde{\underline{d}}) \cdot \underline{S}_R = \underline{S}$$

$$\tilde{\underline{S}}_R \cdot \underline{d} = \underline{S} - \underline{S}_R \qquad (= -\tilde{\underline{d}} \cdot \underline{S}_R \quad !)$$

$$\underline{G}^T \cdot \underline{d} = \xi$$

$$\begin{bmatrix} \tilde{\underline{S}}_R \\ \underline{G}^T \end{bmatrix} \cdot \underline{d} \equiv \underline{M}_R \cdot \underline{d} = \begin{bmatrix} \underline{S} - \underline{S}_R \\ \xi \end{bmatrix} \qquad (2g)$$

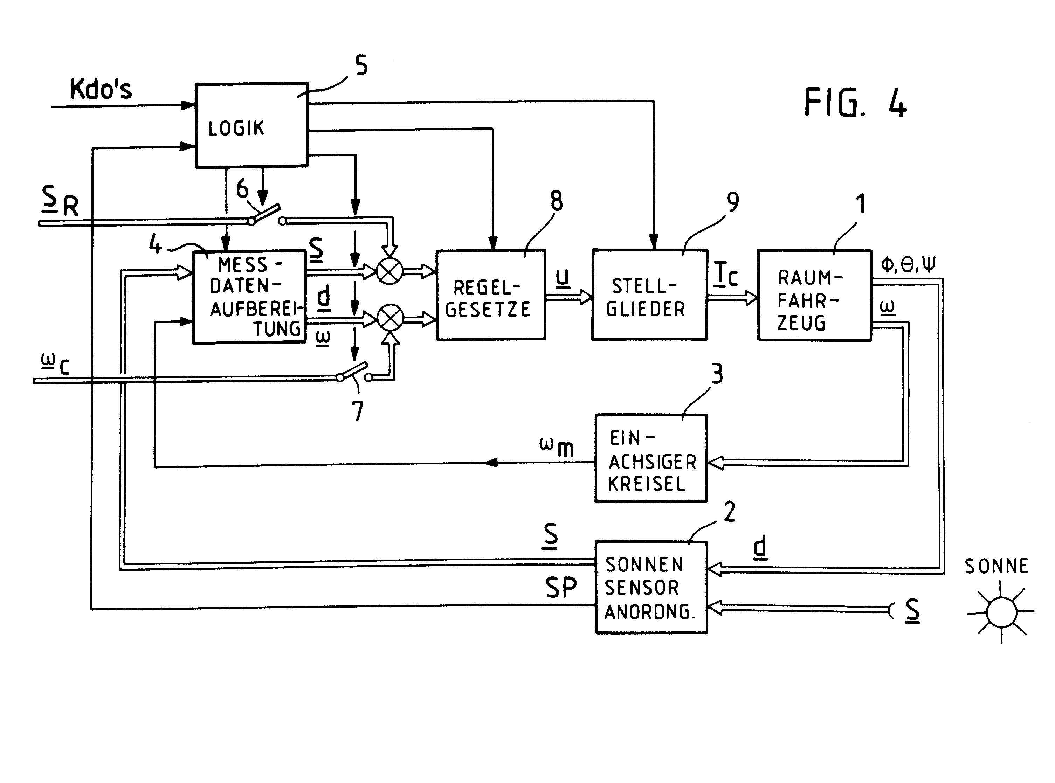

In Fig. 4 ist als Beispiel für eine Anwendungsmöglichkeit der erfindungsgemäßen Meßanordnung ein Blockschaltbild eines Lageregelungssystems zur Durchführung von Transferbahn- und Akquisitionsmanövern bei einem dreiachsenstabilisierten Erdsatelliten gezeigt. Der Satellit 1 ist gekennzeichnet durch seinen Drehgeschwindigkeitsvektor $\underline{\omega}$ sowie durch seine Ablage (Euler-Winkel $\Phi$, $\Theta$, $\Psi$) bezüglich des die vorgegebene Sollorientierung repräsentierenden Sonnen-Referenzvektors $\underline{S}_R$ (Ablagevektor $\underline{d}$). Der durch die Ablage verursachte, vom Sonnen-Referenzvektor abweichende reale Sonnenvektor $\underline{S}$ wird mit Hilfe der Sonnensensoren 2 gemessen, sobald sich die Sonne in deren Meßbereich befindet, was durch ein entsprechendes Signal (sun presence = SP) angezeigt wird. Ein einachsig messender, integrierender Geschwindigkeitskreisel 3 mißt die zu seiner Meßachse parallele Komponente $\omega_m$ des Satelliten-Drehgeschwindigkeitsvektors $\underline{\omega}$. Die Auswertung der Meßgrößen $\omega_m$ und $\underline{S}$ erfolgt in einer Meßdatenaufbereitung 4 gemäß den Vorschriften (1a) bis (1d) bzw. (2a) bis (2e), so daß am Ausgang die Vektorgrößen $\underline{S}$, $\underline{d}$ sowie $\underline{\omega}$ zur Verfügung stehen. Eine Logik 5 sorgt mit Hilfe externer Kommandos und interner Logiksignale (z.B. SP) dafür, daß im nachfolgenden Regler 8 die zugehörigen Regelgesetze zur Anwendung kommen, in der Meßdatenaufbereitung 4 die dazu benötigten Vektorgrößen ermittelt und über Schalter 6, 7 die erforderlichen Referenzgrößen, d.h. der Sonnenreferenzvektor $\underline{S}_R$ sowie der kommandierte Drehgeschwindigkeitsvektor $\underline{\omega}_C$, aufgeschaltet werden. Am Ausgang des Reglers 8 steht dann eine vektorielle Stellgröße $\underline{u}$ an, welche die Stellglieder 9 dazu veranlaßt, entsprechende Drehmomente $\underline{T}_C$ für den Satelliten 1 abzugeben.

Signalpfade für Vektorgrößen sind in Fig. 4 durch Doppelpfeile, solche für skalare Größen oder Logiksignale durch einfache Wirkungslinien dargestellt. Die Realisierung der logischen Abläufe sowie der Vorschriften für die Datenaufbereitung und die Regelgesetze können unter Verwendung von Logikbausteinen und elektrischen Netzwerken oder in einem Bordrechner erfolgen.

Die für die Erdakquisition und -orientierung noch benötigten Erdsensoren sind in Fig. 4 nicht dargestellt.

Die Regelgesetze zur Durchführung der Transferbahn-Manöver lassen sich in allgemeiner Form in Vektorschreibweise wie folgt angeben:

$$\underline{u} = -\underline{K}_D \underline{L}_D (\underline{\omega} - \underline{\omega}_C) + \underline{K}_P \underline{L}_P \, (\underline{\widetilde{S}}_R \underline{S}) \qquad\qquad (3a)$$

Dabei bedeuten $\underline{K}_P$ = diag ($k_{PX}$, $k_{PY}$, $k_{PZ}$) sowie $\underline{K}_D$ = diag ($k_{DX}$, $k_{DY}$, $k_{DZ}$) die Diagonalmatrizen der Lage- bzw. Geschwindigkeits-Verstärkungsfaktoren, $L_P$ und $L_D$ Signalbegrenzungen sowie $\underline{\omega}_C$ der kommandierte Drehgeschwindigkeitsvektor (z.B. für Suchbewegungen und bei Sonnenorietierung). Die Lage- und Geschwindigkeits-Verstärkungsfaktoren berücksichtigen die Natur und Anordnung der Stellglieder, beispielsweise Lageregelungsdüsen, etwa deren unterschiedliche Hebelarme oder auch unterschiedliche Trägheitsmomente bezüglich Drehungen um die verschiedenen Satellitenachsen, mit dem Ziel der Erzeugung gleichmäßiger Drehmomentkomponenten um die genannten Achsen. Die Signalbegrenzungen haben den Charakter von Operatoren und sorgen dafür, daß die beiden in Gleichung (3a) gegeben vektoriellen Anteile des Stellgrößenvektors $\underline{u}$ dem Betrage nach vorgegebene Grenzen nicht überschreiten können, damit keine zu starken Pendelbewegungen um die anzustrebende Sollorientierung angeregt werden.

Für reine Drehgeschwindigkeitsregelung um einzelne Fahrzeugachsen, wie z.B. um die Z-Achse bei Sonnenorientierung (Position $P_1$ in Fig. 1), kann die entsprechende Komponente der Verstärkungsmatrix für die Lageaufschaltung ($K_{PX}$, $K_{PY}$, $K_{PZ}$) gleich 0 gesetzt werden.

Eines der wichtigsten Manöver, welches stets durchführbar sein muß, ist dann erforderlich, wenn sich die Sonne nicht im Meßbereich eines der Sonnensensoren befindet und dadurch eine vollständige Bestimmung des Drehgeschwindigkeitsvektors $\underline{\omega}$ nicht möglich ist. Dieser Fall kann bei beliebiger Anfangslage des Satelliten oder bei zu starker Abwanderung aus der Sollorientierung auftreten. Dann wird zunächst unter Anwendung des Regelgesetzes

$$\underline{u} = -\underline{K}_D \underline{G} \, \underline{G}^T \underline{\omega} \qquad (3b)$$

die über den einachsigen Geschwindigkeitskreisel meßbare Komponente $\omega_m = \underline{G}^T \underline{\omega}$ der Satelliten-Drehgeschwindigkeit $\underline{\omega}$ auf 0 geregelt. Der Satellit kann sich dann nur noch um eine zur Meßachse des Geschwindigkeitskreisels senkrechte Achse unbemerkt drehen.

Hier kommt nun das wichtige Merkmal der Erfindung, welches die zulässige Orientierung der Meßachse des Geschwindigkeitskreisels in Bezug auf den Meßbereich der Sonnensensoren ($|\alpha_2| \leq \alpha_{2max}$) festlegt, zum tragen. Liegt nämlich die Meßachse in dem Bereich $|\beta_2| \geq (\pi/2) - \alpha_{2max}$, so ist damit gewährleistet, daß die zur Meßachse senkrechte Richtung innerhalb des Meßbereiches der Sonnensensoren liegt. Wenn sich der Satellit dann um diese zur Meßachse senkrechte Richtung dreht, so wird die Sonne je nach Drehgeschwindigkeit früher oder später in den Meßbereich der Sonnensensoren einwandern, weil dieser bei der Drehung die gesamte Himmelskugel überstreicht. Liegt die Meßachse des Geschwindigkeitskreisels dagegen außerhalb des oben definierten zulässigen Bereichs, so existieren stets rotationssymmetrisch doppelkegelförmig um die zur Meßachse senkrecht orientierte Richtung herum angeordnete Raumbereiche, die vom Meßbereich der Sonnensensoren nicht erfaßt werden können.

Ist die nach Anwendung des Regelgesetzes gemäß Gleichung (3b) resultierende, allerdings nicht bekannte Drehung um die zur Meßachse senkrechte Achse zu langsam oder gar gleich 0, erscheint die Sonne also nach Ablauf einer vorgegebenen Zeitspanne nicht im Meßbereich eines der Sonnensensoren, so wird, wie in Fig. 4 durch ein Logiksignal schematisch angedeutet, dem Satelliten durch direkte Ansteuerung der Stellglieder 9 mit einem Drehmomentenimpuls vorgegebener Größe eine Drehgeschwindigkeit erteilt, beispielsweise um eine in der XZ-Ebene liegende Drehachse, welche die Sonne in das Gesichtsfeld bzw. den Meßbereich der Sonnensensoren führt.

Die oben erwähnte und in Fig. 3b dargestellte, weitere Einschränkung des zulässigen Bereichs für die Orientierung der Meßachse des Geschwindigkeitskreisels läßt sich wie folgt begründen: Der Fig. 3b liegt die Annahme zugrunde, daß eine Betriebsphase geplant oder voraussehbar ist, während der der Sonnenvektor $\underline{S}$ mit der positiven Z-Achse zusammenfallen soll. Wenn dann die Meßachse des Geschwindigkeitskreisels in der XY-Ebene liegt, ist es nicht möglich, Drehgeschwindigkeitskomponenten senkrecht zur XY-Ebene zu messen. Denn in diesem Falle mißt der Geschwindigkeitskreisel nur Drehgeschwindigkeitskomponenten in der XY-Ebene, und auch mit den Sonnensensoren kann eine senkrecht zu dieser Ebene vorhandene Drehgeschwindigkeitskomponente nicht gemessen werden, da diese genau in Richtung des Sonnenvektors $\underline{S}$ bzw. der Z-Achse liegt, der Sonnenvektor also trotz Drehung des Satelliten seine Orientierung im Koordinatensystem genau beibehält. Deshalb ist der in Fig. 3b gezeigte verbotene Bereich $\pm\gamma_X$ für die Meßachse des Geschwindigkeitskreisels vorgesehen. Liegt die Meßachse außerhalb dieses verbotenen Bereichs, so kann der Geschwindigkeitskreisel auch eine Drehgeschwindigkeitskomponente in Z-Richtung erfassen, falls $\gamma_X$ nicht zu klein gewählt wird. Die allgemeine Bedingung dafür, daß der Geschwindigkeitskreisel Drehgeschwindigkeitskomponenten in Richtung des Sonnenvektors $\underline{S}$ messen kann, läßt sich dahingehend formulieren, daß das Skalarprodukt aus dem die Meßachse repräsentierenden Vektor $\underline{G}^T$ und dem Sonnenvektor $\underline{S}$ nicht verschwinden darf bzw. einen gewissen Mindestwert haben muß:

$$\underline{G}^T \cdot \underline{S} \geq \epsilon > 0$$

Aus dem vorgebbaren Wert für $\epsilon$ folgt im vorliegenden konkreten Fall für den verbotenen Winkelbereich von $\pm\gamma_X$: $\epsilon = \sin(\gamma_X)$. Falls ein Betriebszustand vorgesehen ist, in welchem der Sonnenvektor $\underline{S}$ in die Richtung der X-Achse orientiert sein soll, so muß ein Winkelbereich $\pm\gamma_Z$ beiderseits der Z-Achse und rotationssymmetrisch zur X-Achse für die Meßachse des Geschwindigkeitskreisels verboten sein. Für anders gelagerte Referenzorientierungen des Sonnenvektors $\underline{S}$ ist die o.g. Bedingung entsprechend anzuwenden.

## Patentansprüche

**1.** Meßanordnung für die Anwendung bei der Lageregelung eines dreiachsenstabilisierten Satelliten, mit Sonnensensoren zur Ermittlung des die Sonnenrichtung bezüglich eines satellitenfesten Koordinatensystems XYZ angebenden Sonnenvektors $\underline{S} = (S_X, S_Y, S_Z)^T (|\underline{S}| = 1)$ und mit Geschwindigkeitskreiseln zur Ermittlung von Komponenten des Drehgeschwindigkeitsvektors $\underline{\omega} = (\omega_X, \omega_Y, \omega_Z)^T$ des Satelliten, **dadurch gekennzeichnet,** daß der Meßbereich der Sonnensensoren in einer vorwählbaren Ebene des satellitenfesten Koordinatensystems die volle Rundumsicht und senkrecht dazu beiderseits der Ebene einen begrenzten Winkel bereich von $|\alpha_2| \leq \alpha_{2max}$ mit $\alpha_{2max} < \pi/2$ umfaßt, und daß nur ein einachsig messender, integrierender Geschwindigkeitskreisel vorhanden ist, dessen Meßachse $\underline{G} = (G_X, G_Y, G_Z)^T (|\underline{G}| = 1)$ mit der vorwählbaren Ebene einen Winkel $\beta$ einschließt, für den gilt:

$$|\beta| \geq (\pi/2) - \alpha_{2max}.$$

**2.** Meßanordnung nach Anspruch 1, **dadurch gekennzeichnet,** daß der Geschwindigkeitskreisel mit seiner Meßache $\underline{G}$ so orientiert ist, daß zusätzlich stets die Bedingungen

$$\underline{G}^T \cdot \underline{S}_{Ri} \geq \epsilon > 0$$

erfüllt sind, wobei $\underline{S}_{Ri}$ die Sonnen-Referenzvektoren für unterschiedliche, durch einen Index i gekennzeichnete, voraussehbare Betriebsphasen sind, in denen die jeweils entsprechende Sollorientierung für längere Zeit einzuhalten ist.

**3.** Auswerteverfahren unter Verwendung der Meßanordnung nach Anspruch 1 oder 2, zur Ermittlung der Satelliten-Drehgeschwindigkeit, **dadurch gekennzeichnet,** daß aus dem mit Hilfe der Sonnensensoren gemessenen Sonnenvektor $\underline{S}$, der daraus gewonnenen zeitlichen Ableitung $\underline{\hat{S}}$ und dem Meßsignal $\omega_m$

des Geschwindigkeitskreisels der Drehgeschwindigkeitsvektor $\underline{\omega}$ ermittelt wird gemäß der Vorschrift:

$$\underline{\omega} = \underline{\omega}_q + \underline{S} \cdot \frac{\omega_m - \underline{G}^T \cdot \underline{\omega}_q}{\underline{G}^T \cdot \underline{S}}$$

$$\underline{\omega}_q = -\underline{\tilde{S}} \cdot \underline{\hat{S}}$$

mit der Matrix

$$\underline{\tilde{S}} \equiv \begin{bmatrix} 0 & -S_Z & S_Y \\ S_Z & 0 & -S_X \\ -S_Y & S_X & 0 \end{bmatrix}$$

4. Auswerteverfahren unter Verwendung der Meßanordnung gemäß Anspruch 1 oder 2, zur Bestimmung der Satelliten-Ablage bezüglich einer für den Sonnenvektor $\underline{S}$ vorgebbaren Referenzrichtung, **dadurch gekennzeichnet,** daß aus dem von den Sonnensensoren gemessenen Sonnenvektor $\underline{S}$, dem die Referenzrichtung repräsentierenden Sonnen-Referenzvektor $\underline{S}_R$ und dem Meßsignal $\omega_m$ des Geschwindigkeitskreisels der Satelliten-Ablagevektor $\underline{d}$ ermittelt wird gemäß der Vorschrift

$$\underline{d} = \underline{d}_q + \underline{S}_R \frac{\xi - \underline{G}^T \cdot \underline{d}_q}{\underline{G}^T \cdot \underline{S}_R}$$

$$\underline{d}_q = -\underline{\tilde{S}}_R \cdot \underline{S}$$

mit

$$\xi \equiv \int_0^t \omega_m \, dt$$

und der Matrix

$$\underline{\tilde{S}}_R = \begin{bmatrix} 0 & -S_{RZ} & S_{RY} \\ S_{RZ} & 0 & -S_{RX} \\ -S_{RY} & S_{RX} & 0 \end{bmatrix}$$

## Claims

1. Measuring arrangement for the use in attitude control of a three-axes-stabilized satellite, comprising sun sensors for determining the sun vector $\underline{S} = (S_X, S_Y, S_Z)^T (|S| = i)$ which indicates the sun direction relative to a satellite fixed coordinate system XYZ and with velocity gyros for determining components of the rotary velocity vector $\underline{\omega} = (\omega_X, \omega_Y, \omega_Z)^T$ of the satellite, **characterized in that** the measuring range of the sun sensors covers in a preselectable plane of the satellite fixed coordinate system the full round view and vertically thereto on both sides of the plane a defined angular range of $|\alpha_2| \leq \alpha_{2max}$ with $\alpha_{2max} < \pi/2$, and that there is only a single-axis measuring integrating velocity gyro the measuring axis $\underline{G} = (G_X, G_Y, G_Z)^T (|\underline{G}| = 1)$ with the preselectable plane includes an angle $\beta$ to which applies:

$$|\beta| \geq (\pi/2) - \alpha_{2max.}$$

2. Measuring arrangement according to claim 1, **characterized in that** the velocity gyro is oriented with its measuring axis $\underline{G}$ in such a manner that additionally the conditions

$$\underline{G}^T \times \underline{S}_{R1} \geq \epsilon >> 0$$

are met, and that $\underline{S}_{Ri}$ are the sun reference vectors for different forseeable operating phases, as characterized by an index i, wherein a respective corresponding nominal orientation is to be maintained for extended periods.

3. Evaluation process using the measuring arrangement of claim 1 or 2 for determining the satellite rotary velocity, **characterized in that** the rotary velocity vector $\underline{\omega}$ is determined with the aid of sun vector $\underline{S}$ as measured with the aid of the sun sensors and a therefrom derived temporal derivate $\underline{\hat{S}}$ and the measuring signal $\omega_m$ of the velocity gyro, according to the rule:

$$\underline{\omega} = \underline{\omega}_q + \underline{S} \times \frac{\omega_m - \underline{G}^T \times \underline{\omega}_q}{\underline{G}^T \times \underline{S}}$$

$$\underline{\omega}_q = -\underline{\tilde{S}} \times \underline{\hat{S}}$$

with the matrix

$$\underline{\tilde{S}} \equiv \begin{bmatrix} 0 & -S_Z & S_Y \\ S_Z & 0 & -S_X \\ -S_Y & S_X & 0 \end{bmatrix}.$$

4. Evaluation process using the measuring arrangement according to claim 1 or 2 for determining the satellite placement relative to a specified reference direction for the sun vector $\underline{S}$, **characterized in that** the satellite placement vector $\underline{d}$ is determined from the sun vector $\underline{S}$ as measured by the sun sensors, the sun reference vector $\underline{S}_R$ which represents the reference direction, and the measuring signal $\omega_m$ of the velocity gyro according to the rule:

$$\underline{d} = \underline{d}_q + \underline{S}_R \frac{\xi - \underline{G}^T \times \underline{d}_q}{\underline{G}^T \times \underline{S}_R}$$

$$\underline{d}_p = -\underline{\tilde{S}}_R \times \underline{S}$$

with

$$\xi \equiv \int_{O}^{t} \omega_m \, dt$$

and the matrix

$$\underset{\sim}{\tilde{S}}_R = \begin{bmatrix} O & -S_{RZ} & S_{RY} \\ S_{RZ} & O & -S_{RX} \\ -S_{RY} & S_{RX} & O \end{bmatrix}$$

## Revendications

1. Dispositif de mesure destiné à être utilisé pour la régulation de l'attitude d'un satellite stabilisé suivant trois axes, comportant des détecteurs de repérage de la position du soleil aux fins de déterminer le vecteur solaire $\underline{S} = (S_X, S_Y, S_Z)^T (|\underline{S}| = 1)$ indiquant la direction du soleil par rapport à un système de coordonnées XYZ lié au satellite et des gyromètres pour déterminer des composantes du vecteur de vitesse angulaire $\underline{\omega} = (\omega_X, \omega_Y, \omega_Z)$ du satellite, caractérisé par le fait que le champ de mesure des détecteurs de repérage de la position du soleil est parfaitement panoramique dans un plan prédéterminé du système de coordonnées lié au satellite et englobe une plage angulaire limitée de $|\alpha_2| \leq \alpha_{2max}$ perpendiculairement audit plan et de chaque côté de celui-ci, avec $\alpha_{2max} < \pi/2$, et par le fait qu'il n'est prévu qu'un gyromètre intégrateur qui effectue la mesure suivant un axe et dont l'axe de mesure $\underline{G} = (G_X, G_Y, G_Z)^T (|\underline{G}| = 1)$ forme avec le plan prédéterminé un angle $\beta$ tel que: $|\beta| \geq \pi/2 - \alpha_{2max}$.

2. Dispositif de mesure selon la revendication 1, caractérisé par le fait que l'axe de mesure $\underline{G}$ du gyromètre est orienté de manière telle qu'en outre la condition

   $\underline{G}^{T*} = \underline{S}_{Ri} \geq \epsilon > 0$

   soit toujours satisfaite, dans laquelle $\underline{S}_{RI}$ représente les vecteurs de référence du soleil pour différentes phases de fonctionnement prévisibles, désignées par un indice, au cours desquelles l'orientation de consigne correspondante doit être maintenue pendant un temps relativement long.

3. Procédé de traitement utilisant le dispositif de mesure selon la revendication 1 ou la revendication 2, pour déterminer la vitesse angulaire du satellite, caractérisé par le fait qu'à partir du vecteur solaire $\underline{S}$ mesuré au moyen des détecteurs de repérage de la position du soleil, de la dérivée par rapport au temps $\hat{\underline{S}}$ tirée de celui et du signal de mesure $\omega_m$ du gyromètre on détermine le vecteur de vitesse angulaire $\underline{\omega}$ suivant la formule

$$\underline{\omega} = \underline{\omega}_q + \underline{S} * \frac{\omega_m - \underline{G}^T * \underline{\omega}_q}{\underline{G}^T * \underline{S}}$$

$$\underline{\omega}_q = -\tilde{\underline{S}} * \hat{\underline{S}}$$

avec la matrice

$$\tilde{\underline{S}} \equiv \begin{vmatrix} 0 & -S_Z & S_Y \\ S_Z & 0 & -S_X \\ -S_Y & S_X & 0 \end{vmatrix}$$

4. Procédé de traitement utilisant le dispositif de mesure selon la revendication 1 ou la revendication 2, pour déterminer l'écart de position du satellite par rapport à une direction de référence prédéterminée du vecteur solaire $\underline{S}$, caractérisé par le fait qu'à partir du vecteur solaire $\underline{S}$ mesuré au moyen des détecteurs de repérage de la position du soleil, du vecteur solaire $S_R$ de référence représentant la direction de référence et du signal de mesure $\omega_m$ du gyromètre, on détermine le vecteur $\underline{d}$ d'écart de position du satellite selon la règle

$$\underline{d} = \underline{d}_q + \underline{S}_R * \frac{\zeta_m - \underline{G}^T * \underline{d}_q}{\underline{G}^T * \underline{S}_R}$$

$$\underline{d}_q = -\tilde{\underline{S}}_R * \underline{S}$$

avec

$$\zeta \equiv \int_0^t \omega_m dt$$

avec la matrice

$$\underline{SR} \equiv \begin{vmatrix} 0 & -S_{RZ} & S_{RY} \\ S_{RZ} & 0 & -S_{RX} \\ -S_{RY} & S_{RX} & 0 \end{vmatrix}$$

FIG. 1

FIG. 2a

FIG. 2b

FIG. 3a

FIG. 3b

FIG. 4

EP 0 601 051 B1